# EUROPÄISCHE PATENTSCHRIFT

(11) **EP 2 632 583 B1**
(45) Veröffentlichungstag und Bekanntmachung des Hinweises auf die Patenterteilung: **21.02.2018**
(21) Anmeldenummer: 11776397.9
(22) Anmeldetag: 20.10.2011
(51) Int. Cl.: B01J 13/00, B22F 9/24

(54) **METALLPARTIKELSOL MIT DOTIERTEN SILBERNANOPARTIKELN**
METAL SOL CONTAINING DOPED SILVER NANOPARTICLES
SOL DE PARTICULES MÉTALLIQUES COMPRENANT DES NANOPARTICULES D'ARGENT DOPÉES

(30) Priorität: 25.10.2010 EP 10188779
(43) Veröffentlichungstag der Anmeldung: 04.09.2013
(73) Patentinhaber: Clariant International Ltd, 4132 Muttenz (CH)
(72) Erfinder: EIDEN, Stefanie, 51371 Leverkusen (DE); SCHAEDLICH, Elsa Karoline, 53117 Bonn (DE)
(74) Vertreter: Jacobi, Carola
(86) Internationale Anmeldenummer: PCT/EP2011/068344
(87) Internationale Veröffentlichungsnummer: WO 2012/055758

(56) Entgegenhaltungen:
- EP-A1- 2 130 627
- EP-A2- 0 176 760
- FR-A5- 2 131 683
- US-A- 3 788 833
- US-A1- 2010 072 434
- US-A1- 2010 101 637
- DATABASE WPI Week 200813 Thomson Scientific, London, GB; AN 2008-B74175 XP002633086, -& JP 2008 007849 A (NIPPON PAINT CO LTD) 17. Januar 2008 (2008-01-17)
- DATABASE WPI Week 200251, Derwent Publications Ltd., London, GB; AN 2002-473899 -& JP 2001 325831 A (BANDO CHEM IND LTD) 22 November 2001

## Beschreibung

Die Erfindung betrifft ein Metallpartikelsol, welches Silbernanopartikel aufweist, die mit einem Rutheniummetall bzw. einer Rutheniummetallverbindung dotiert sind, sowie ein Verfahren zur Herstellung eines solchen Sol und dessen Verwendung. Metallpartikelsole enthaltend Silbernanopartikel werden unter anderem zur Herstellung von leitfähigen Beschichtungen bzw. zur Herstellung von Tinten für Inkjet- und Siebdruckverfahren zwecks Herstellung von leitfähigen, strukturierten Beschichtungen, beispielsweise im Form von Mikrostrukturen, mittels Druckverfahren eingesetzt. Dabei steht vielfach die Beschichtung flexibler Kunststoffsubstrate im Vordergrund, wie z.B. zur Herstellung flexibler RFID-Tags. Zur Erzielung einer ausreichenden Leitfähigkeit müssen die mittels der Silbernanopartikelsole aufgebrachten Beschichtungen für eine ausreichende Zeit bei erhöhten Temperaturen getrocknet und gesintert werden, was für die Kunststoffsubstrate eine erhebliche thermische Belastung darstellt.

Es existiert daher das Bestreben, die Sinterzeiten und/oder die Sintertemperaturen, die für die Erzielung ausreichender Leitfähigkeiten erforderlich sind, durch geeignete Maßnahmen derart herabzusetzen, dass eine solche thermische Belastung der Kunststoffsubstrate verringert werden kann.

In WO 2007/118669 A1 wird die Herstellung von Metallpartikelsolen beschrieben, worin die zur Herstellung eingesetzte die Metallsalzlösung Ionen umfasst, die ausgewählt sind aus der Gruppe umfassend Eisen, Ruthenium, Osmium, Kobalt, Rhodium, Iridium, Nickel, Palladium, Platin, Kupfer, Silber, Gold, Zink und/oder Cadmium. WO 2007/118669 A1 beschreibt jedoch keinerlei Maßnahmen zur Verringerung der Sinterzeit oder Sintertemperatur.

In US 4,778,549 ist beschrieben, dass die Zersetzung organischer Materialien aus Glas- oder Keramikkörpern beim Erhitzen auf Temperaturen von mehr als 750°C durch die Anwesenheit von katalytisch wirkenden Metallen ausgewählt aus der Gruppe Ruthenium, Rhodium, Palladium, Osmium, Iridium und Platin beschleunigt werden kann. Aus J. Am. Chem. Soc. 1989, 111, 1185-1193 ist bekannt, dass die Zersetzung von polymeren Ethern auf der metallischen Oberfläche von Ru(001) katalysiert werden kann. Keines dieser Dokumente gibt jedoch einen Anhaltspunkt dafür, wie die für die Erzielung ausreichender Leitfähigkeiten erforderlichen Sinterzeiten und/oder die Sintertemperaturen von Beschichtungen aus Silbernanopartikeln herabgesetzt werden können, um die thermischen Belastung von Kunststoffsubstraten zu reduzieren JP 2001 325831 A offenbart ein Metallnanopartikelsol mit einem Metallpartikelgehalt von 1-70 Gew.-%, enthaltend Silbernanopartikel, wenigstens ein und wenigstens ein flüssiges Dispersionsmittel dadurch gekennzeichnet, dass das Metallpartikelsol 5/95*100 = 5 Gew.-% bis 40/60*100 = 67 Gew.-% eines Rutheniummetalls bezogen auf den Silbergehalt des Metallnanopartikelsols enthält.

Es bestand demnach weiterhin Bedarf an einer einfachen Möglichkeit, zur Verringerung der thermischen Belastung von Kunststoffsubstraten die Sinterzeiten und/oder die Sintertemperaturen von Beschichtungen enthaltend Silbernanopartikel zu reduzieren und gleichzeitig eine für die Anwendung ausreichende Leitfähigkeit zu erzielen.

Die Aufgabe der vorliegenden Erfindung bestand demnach darin, ein Metallpartikelsol enthaltend Silbernanopartikel sowie ein Verfahren zu dessen Herstellung aufzufinden, mit dem die für die Erzielung ausreichender Leitfähigkeiten erforderlichen Sinterzeiten und/oder die Sintertemperaturen derart herabgesetzt werden können, dass eine thermische Belastung insbesondere von Kunststoffsubstraten verringert werden kann.

Überraschend wurde gefunden, dass eine Dotierung der Silbernanopartikel mit einem Gehalt von 0,1 bis 10 Gew.-% eines Rutheniummetalls, bezogen auf den Silbergehalt des Metallpartikelsols, in Form des Metalls oder wenigstens einer Verbindung eines solchen Metalls die Sinterzeit, die zur Erzielung einer ausreichenden Leitfähigkeit erforderlich ist, deutlich verringert. Dabei können die Sinterzeiten bis zu 80% verringert werden, was zu einer erheblichen thermischen Entlastung insbesondere von thermisch empfindlichen Kunststoffsubstraten führt und zudem die verfügbare Palette möglicher Kunststoffsubstrate für die Beschichtung mit solchen leitfähigen Strukturen erweitern kann. Alternativ können durch vergleichbare Sinterzeiten, mit den erfindungsgemäßen Metallpartikelsolen deutlich höhere Leitfähigkeiten erzielt werden als mit bekannten Silbernanopartikelsolen ohne die entsprechende Dotierung.

Gegenstand der vorliegenden Erfindung ist demnach ein Metallnanopartikelsol mit einem Metallnanopartikelgehalt von ≥ 1 g/l enthaltend
- Silbernanopartikel
- wenigstens ein Dispergierhilfsmittel und
- wenigstens ein flüssiges Dispersionsmittel
dadurch gekennzeichnet, dass das Metallpartikelsol 0,1 bis 10 Gew.-% Ruthenium, bezogen auf den Silbergehalt des Metallnanopartikelsols, in Form des Metalls und/oder wenigstens einer Metallverbindung enthält, wobei das Ruthenium zu mindestens 90 Gew.-% in form von Rutheniumdioxid vorliegt. Vorzugsweise liegt der Gehalt des Rutheniummetalls und/oder wenigstens einer

Metallverbindung bei einer Menge von 0,1 bis 5 Gew.-%, besonders bevorzugt bei einer Menge von 0,4 bis 2 Gew.-%, bezogen auf den Silbergehalt des Metallnanopartikelsols. Das Ruthenium liegt in den erfindungsgemäßen Metallnanopartikelsolen zu mindestens 90 Gew.-%, bevorzugt zu wenigstens 95 Gew.-%, besonders bevorzugt zu wenigstens 99 Gew.-%, ganz besonders bevorzugt vollständig in Form von Rutheniumdioxid vor.

In bevorzugsten Ausführungsformen weisen die Silbernanopartikel im Metallnanopartikelsol mindestens 80 %, bevorzugt mindestens 90 % des Gehalts an dem wenigstens einen Rutheniummetall auf. Das Metallnanopartikelsol enthält nur eine geringe Menge silberfreie Metallnanopartikel bzw. Metallverbindungsnanopartikel dieses Rutheniummetalls. Bevorzugt enthält das Metallnanopartikelsol weniger als 20 %, besonders bevorzugt weniger als 10 % - bezogen auf den Gehalt an diesem Metall - des Gehalts an diesem Rutheniummetall in Form silberfreier Metallnanopartikel bzw. Metallverbindungsnanopartikel dieses Metalls.

Das erfindungsgemäße Metallnanopartikelsol weist in der Regel bevorzugt einen Metallnanopartikelgehalt von von 1 g/l bis 25,0 g/l auf. Unter Einsatz von Aufkonzentrierungsschritten können jedoch auch Metallnanopartikelgehalte von bis zu 500,0 g/l oder noch höher erreicht werden.

Unter Metallnanopartikeln werden im Rahmen der Erfindung solche mit einem effektiven hydrodynamischen Durchmesser von weniger als 300 nm, bevorzugt mit einem effektiven hydrodynamischen Durchmesser von 0,1 bis 200 nm, besonders bevorzugt von 1 bis 150 nm, ganz besonders bevorzugt von 20 bis 140 nm gemessen mittels dynamischer Lichtstreuung zu verstehen. Für die Messung mittels dynamischer Lichtstreuung eignet sich beispielsweise ein ZetaPlus Zeta Potential Analyzer der Fa. Brookhaven Instrument Corporation.

Die Metallnanopartikel sind mit Hilfe wenigstens eines Dispergierhilfsmittels in wenigstens einem flüssigen Dispersionsmittel dispergiert.

Entsprechend zeichnen sich die erfindungsgemäßen Metallnanopartikelsole durch eine hohe kolloid-chemische Stabilität aus, welche auch bei einer etwaigen Aufkonzentrierung erhalten bleibt. Der Begriff "kolloid-chemisch stabil" bedeutet hierbei, dass sich die Eigenschaften der kolloidalen Dispersion oder der Kolloide selbst während der üblichen Lagerzeiten vor der Anwendung nicht stark verändern, beispielsweise also keine wesentliche Aggregation oder Ausflockung der Kolloidteilchen stattfindet.

Als Dispergiermittel kommen bevorzugt polymere Dispergierhilfsmittel, bevorzugt solche mit einem Molekulargewicht (Gewichtsmittel) *M*_{w}, von 100 g/Mol bis 1000000 g/Mol, besonders bevorzugt von 1000 g/Mol bis 100000 g/Mol in Frage. Solche Dispergierhilfsmittel sind kommerziell erhältlich. Die Molekulargewichte (Gewichtsmittel) *M*_{w} können mittels Gel-Permeations-Chromatographie (GPC), vorzugsweise unter Verwendung von Polystyrol als Standard bestimmt werden.

Die Wahl des Dispergierhilfsmittels erlaubt es auch, die Oberflächeneigenschaften der Metallnanopartikel einzustellen. Auf der Partikeloberfläche haftendes Dispergierhilfsmittel kann beispielsweise den Partikeln eine positive oder negative Oberflächenladung verleihen.

In einer bevorzugten Ausführungsform der vorliegenden Erfindung ist das Dispergierhilfsmittel ausgewählt aus der Gruppe umfassend Alkoxylate, Alkylolamide, Ester, Aminoxide, Alkylpolyglukoside, Alkylphenole, Arylalkylphenole, wasserlösliche Homopolymere, statistische Copolymere, Blockcopolymere, Pfropfpolymere, Polyethylenoxide, Polyvinylalkohole, Copolymere aus Polyvinylalkoholen und Polyvinylacetaten, Polyvinylpyrrolidone, Cellulose, Stärke, Gelatine, Gelatinederivate, Aminosäurepolymere, Polylysin, Polyasparaginsäure, Polyacrylate, Polyethylensulfonate, Polystyrolsulfonate, Polymethacrylate, Kondensationsprodukte von aromatischen Sulfonsäuren mit Formaldehyd, Naphthalinsulfonate, Ligninsulfonate, Copolymerisate acrylischer Monomere, Polyethylenimine, Polyvinylamine, Polyallylamine, Poly(2-vinylpyridine) und/oder Polydiallyldimethylammoniumchlorid.

Solche Dispergierhilfsmittel können einerseits die Partikelgröße und die Partikelgrößenverteilung der Metallnanopartikelsole beeinflussen. Für einige Anwendungen ist es wichtig, dass eine enge Partikelgrößenverteilung vorliegt. Für andere Anwendungen ist es vorteilhaft, wenn eine breite oder multimodale Partikelgrößenverteilung vorliegt, da die Partikel eine dichtere Packung einnehmen können. Als weiterer Vorteil der genannten Dispergierhilfsmittel ist zu nennen, dass sie den Partikeln, auf deren Oberflächen sie haften, gezielte Eigenschaften verleihen können. Neben den bereits erwähnten positiven und negativen Oberflächenladungen, welche durch die gegenseitige Abstoßung mit zur kolloidalen Stabilität beitragen können, seien noch die Hydrophilie oder Hydrophobie der Oberfläche und die Biokompatibilität genannt. Hydrophilie und Hydrophobie der Nanopartikel sind beispielsweise wichtig, wenn die Partikel in einem bestimmten Medium dispergiert werden sollen, beispielsweise in Polymeren. Die Biokompatibilität der Oberflächen erlaubt den Einsatz der Nanopartikel in medizinischen Anwendungen.

Bei dem oder den flüssigen Dispersionsmittel(n) handelt es sich bevorzugt um Wasser oder Mischungen enthaltend Wasser und organische, vorzugsweise wasserlösliche organische Lösungsmittel. Jedoch sind auch andere Lösungsmittel denkbar, beispielsweise wenn das Verfahren bei Temperaturen unter 0°C oder oberhalb von 100°C durchgeführt werden soll oder das erhaltene Produkt in Matrices eingearbeitet werden soll, in denen die Anwesenheit von Wasser störend wäre. Beispielsweise lassen sich polar-protische Lösungsmittel wie Alkohole und Aceton, polar-aprotische Lösungsmittel wie *N,N-*Dimethylformamid (DMF) oder unpolare Lösungsmittel wie CH₂Cl₂ einsetzen. Vorzugsweise enthalten die Mischungen zu mindestens 50 Gew.-%, bevorzugt zu mindestens 60 Gew.-% Wasser, besonders bevorzugt zu mindestens 70 Gew.-% Wasser. Besonders bevorzugt handelt es sich bei dem oder den flüssigen Dispersionsmittel(n) um Wasser oder Mischungen aus Wasser mit Alkoholen, Aldehyden und/oder Ketonen, besonders bevorzugt um Wasser oder Mischungen aus Wasser mit ein- oder mehrwertigen Alkoholen mit bis zu vier Kohlenstoffatomen, wie z.B. Methanol, Ethanol, n-Propanol, iso-Propanol oder Ethylenglykol, Aldehyden mit bis zu vier Kohlenstoffatomen, wie z.B. Formaldehyd, und/oder Ketonen mit bis zu vier Kohlenstoffatomen, wie z.B. Aceton oder Methylethylketon. Ganz besonders bevorzugtes Dispersionsmittel ist Wasser.

Weiterhin Gegenstand der vorliegenden Erfindung ist ein Verfahren zur Herstellung der erfindungsgemäßen Metallnanopartikelsole.

Als besonders vorteilhaft hat sich dabei ein Verfahren erwiesen, bei dem zur Herstellung von nanoskaligen Metallpartikeln zunächst zumindest teilweise nanoskalige Metalloxid- und/oder Metallhydroxidpartikel hergestellt werden, welche in einem anschließenden Schritt reduziert werden. Dabei erfolgt im Rahmen der vorliegenden Erfindung jedoch lediglich eine Reduktion des Silberoxids und/oder Silberhydroxids und/oder Silberoxid-hydroxids zum elementaren Silber. Die Metalloxide des Rutheniummetalls werden nicht oder nicht vollständig, bevorzugt nicht zum elementaren Metall reduziert.

Gegenstand der vorliegenden Erfindung ist demnach ein Verfahren zur Herstellung eines erfindungsgemäßen Metallnanopartikelsols, dadurch gekennzeichnet, dass
a) eine Silbersalzlösung, eine Lösung enthaltend wenigstens ein Metallsalz ausgewählt aus der Gruppe der Rutheniumsalze und eine Hydroxidionen enthaltende Lösung mit einer Konzentration an Hydroxidionen im Bereich von ≥ 0,001 Mol/l bis 2 Mol/l zusammengegeben werden,
b) anschließend die aus Schritt a) erhaltene Lösung mit einem Reduktionsmittel umgesetzt wird,
wobei mindestens eine der Lösungen in Schritt a) wenigstens ein Dispergierhilfsmittel enthält, dadurch gekennzeichnet, dass die drei Lösungen in Schritt a) gleichzeitig zusammengegeben werden.

Überraschend wurde gefunden, dass mit den erhaltenen Metallnanopartikelsolen nur dann die Sinterzeit, die zur Erzielung einer ausreichenden Leitfähigkeit erforderlich ist, verringert werden kann, wenn die in Schritt a) die Silbersalzlösung, die Lösung enthaltend wenigstens ein Metallsalz ausgewählt aus der Gruppe der Rutheniumsalze und die Hydroxidionen enthaltende Lösung gleichzeitig zusammen gegeben werden. Wird die Lösung enthaltend wenigstens ein Metallsalz ausgewählt aus der Gruppe der Rutheniumsalze zur Silbersalzlösung gegeben, bevor die Hydroxidionen enthaltende Lösung zugegeben wird oder wird die zunächst die Silbersalzlösung mit der Hydroxidionen enthaltenden Lösung vermischt und erst anschließend die Lösung enthaltend wenigstens ein Metallsalz ausgewählt aus der Gruppe der Rutheniumsalze zu dieser Lösung hinzugegeben, führt dies bei gleichen Sinterzeiten zu einer deutlich niedrigeren Leitfähigkeit als sie mit den Metallnanopartikelsolen erzielt werden kann, zu deren Herstellung die drei Lösungen gleichzeitig zusammen gegeben werden.

Das gleichzeitige Zusammengeben der drei Lösungen in Schritt a) kann erfindungsgemäß derart erfolgen, dass zwei der drei Lösungen zu der dritten Lösung hinzugegeben werden, wobei es unerheblich ist, welche der Lösungen vorgelegt wird. Das gleichzeitige Zusammengeben der drei Lösungen in Schritt a) kann erfindungsgemäß auch derart erfolgen, dass alle drei Lösungen zusammengeführt werden, ohne dass eine der drei Lösungen vorgelegt wird.

Gegenstand der vorliegenden Erfindung sind demnach insbesondere solche Metallnanopartikelsole, die gemäß dem erfindungsgemäßen Verfahren hergestellt wurden. Ohne auf eine bestimmte Theorie festgelegt zu sein, wird angenommen, dass in dem Schritt a) des erfindungsgemäßen Verfahrens die in der Metallsalzlösung vorhandenen Metallkationen mit den Hydroxidionen der Hydroxidionen enthaltenden Lösung reagieren und hierbei als Metalloxide, Metallhydroxide, gemischte Metalloxid-Hydroxide und/oder deren Hydrate aus der Lösung ausfallen. Man kann dieses Verhalten als eine heterogene Fällung von nanoskaligen und submikroskaligen Partikeln bezeichnen.

In dem zweiten Schritt b) des erfindungsgemäßen Verfahrens wird die Lösung, welche die Metalloxid/-hydroxidpartikel enthält, mit einem Reduktionsmittel umgesetzt.

Im erfindungsgemäßen Verfahren wird die heterogene Fällung der nanoskaligen und submikroskaligen Partikel in Schritt a) in Gegenwart wenigstens eines Dispergierhilfsmittels, auch als Schutzkolloid bezeichnet, durchgeführt. Als derartige Dispergierhilfsmittel kommen bevorzugt die bereits vorangehend für die erfindungsgemäßen Metallpartikelsole genannten in Frage.

Bevorzugt wählt man in Schritt a) des erfindungsgemäßen Verfahrens ein molares Verhältnis zwischen der Stoffmenge an Hydroxidionen und der Stoffmenge an Metallkationen von ≥ 0,5:1 bis ≤ 10:1, bevorzugt ≥ 0,7:1 bis ≤ 5:1, besonders bevorzugt ≥ 0,9:1 bis ≤ 2:1.

Die Temperatur, bei der Verfahrensschritt a) durchgeführt wird, kann beispielsweise in einem Bereich von ≥ 0°C bis ≤ 100°C, bevorzugt ≥ 5°C bis ≤ 50°C, besonders bevorzugt ≥ 10°C bis ≤ 30°C liegen.

Bevorzugt wählt man beim Reduktionsschritt b) einen äquimolares Verhältnis oder einen Überschuss der Äquivalente des Reduktionsmittels im Verhältnis zu den zu reduzierenden Metallkationen von ≥ 1:1 bis ≤ 100:1, bevorzugt ≥ 2:1 bis ≤ 25:1, besonders bevorzugt ≥ 4:1 bis ≤ 5:1.

Die Temperatur, bei der Verfahrensschritt b) durchgeführt wird, kann beispielsweise in einem Bereich von ≥ 0°C bis ≤ 100°C, bevorzugt ≥ 30°C bis ≤ 95°C, besonders bevorzugt ≥ 55°C bis ≤ 90°C liegen.

Der nach Schritt a) erhaltenen Lösung können zur Einstellung eines gewünschten pH-Wertes Säuren oder Basen zugefügt werden. Vorteilhaft ist es beispielsweise, den pH-Wert im sauren Bereich zu halten. Hierdurch kann die Monodispersität der Partikelverteilung im nachfolgenden Schritt b) verbessert werden.

Bevorzugt liegt das Dispergierhilfsmittel in mindestens einer der drei einzusetzenden Lösungen (Eduktlösungen) für Schritt a) in einer Konzentration von ≥ 0,1 g/l bis ≤ 100 g/l, bevorzugt ≥ 1 g/l bis ≤ 60 g/l, besonders bevorzugt ≥ 1 g/l bis ≤ 40 g/l vor. Falls zwei oder alle drei einzusetzenden Lösungen in Schritt a) des erfindungsgemäßen Verfahrens das Dispergierhilfsmittel umfassen, ist es möglich, dass die Dispergierhilfsmittel verschiedene sind und in verschiedenen Konzentrationen vorliegen.

Durch die Auswahl eines solchen Konzentrationsbereiches ist einerseits sichergestellt, dass die Teilchen bei der Fällung aus der Lösung soweit mit Dispergierhilfsmittel bedeckt werden, dass die gewünschten Eigenschaften wie Stabilität und Redispergierbarkeit erhalten bleiben. Andererseits wird eine übermäßige Umhüllung der Teilchen mit dem Dispergierhilfsmittel vermieden. Ein unnötiger Überschuss an Dispergierhilfsmittel könnte außerdem in unerwünschter Weise mit dem Reduktionsmittel reagieren. Weiterhin kann eine zu große Menge Dispergierhilfsmittel nachteilig für die kolloidale Stabilität der Teilchen sein und die Weiterverarbeitung erschweren. Nicht zuletzt erlaubt es die Auswahl, Flüssigkeiten mit verfahrenstechnisch gut handhabbarer Viskosität zu verarbeiten und zu erhalten.

Bei der Silbersalzlösung handelt es sich bevorzugt um eine solche enthaltend Silberkationen und Anionen ausgewählt aus der Gruppe Nitrat, Perchlorat, Fulminate, Citrat, Acetat, Acetylacetonat, Tetrafluoroborat oder Tetraphenylborat. Besonders bevorzugt sind Silbernitrat, Silberacetat oder Silbercitrat. Ganz besonders bevorzugt ist Silbernitrat.

Bevorzugt liegen die Silberionen in der Silbersalzlösung in einer Konzentration von ≥ 0,001 Mol/l bis ≤ 2 Mol/l, besonders bevorzugt ≥ 0,01 Mol/l bis ≤ 1 Mol/l, ganz besonders bevorzugt ≥ 0,1 Mol/l bis ≤ 0,5 Mol/l vor. Dieser Konzentrationsbereich ist vorteilhaft, da bei geringeren Konzentrationen der erreichte Feststoffgehalt des Nanosols zu gering sein können und kostenträchtige Nachbehandlungsschritte nötig werden könnten. Bei höheren Konzentrationen besteht die Gefahr, dass die Fällung der Oxid/Hydroxidteilchen zu schnell ablaufen, was eine ungleichmäßige Partikelmorphologie zur Folge hätte. Zudem würden die Partikel durch die hohe Konzentration weiter aggregieren.

Bei der Lösung enthaltend wenigstens ein Metallsalz ausgewählt aus der Gruppe der Rutheniumsalze handelt es sich bevorzugt um eine solche enthaltend ein Kation eines Rutheniummetalls und wenigstens eines der Gegenanionen zu den Metallkationen ausgewählt aus der Gruppe Nitrat, Chlorid, Bromid, Sulfat, Carbonat, Acetat, Acetylacetonat, Tetrafluoroborat, Tetraphenylborat oder Alkoxid-Anionen (Alkoholat-Anionen), wie z.B. Ethoxid. Es handelt sich bei dem Metallsalz um wenigstens ein Rutheniumsalz, ganz besonders bevorzugt um ein solches ausgewählt aus Rutheniumchlorid, Rutheniumacetat, Rutheniumnitrat, Rutheniumethoxid oder Rutheniumacetylacetonat.

Bevorzugt liegen die Metallionen in der Metallsalzlösung in einer Konzentration von 0,01 g/l bis 1 g/l vor.

Bevorzugt ist die Hydroxidionen enthaltende Lösung erhältlich aus der Reaktion von Basen ausgewählt aus der Gruppe umfassend LiOH, NaOH, KOH, Mg(OH)₂, Ca(OH)₂, NH₄OH, aliphatische Amine, aromatische Amine, Alkalimetallamide und/oder Alkoxide. Besonders bevorzugte Basen sind NaOH und KOH. Solche Basen weisen den Vorteil auf, dass sie kostengünstig erhalten werden können und bei einer späteren Abwasserbehandlung der Lösungen aus dem erfindungsgemäßen Verfahren leicht zu entsorgen sind.

Die Konzentration der Hydroxidionen in der Hydroxidionen enthaltenen Lösung liegt in einem Bereich von ≥ 0,001 Mol/l bis ≤ 2 Mol/l, besonders bevorzugt ≥ 0,01 Mol/l bis ≤ 1 Mol/l, ganz besonders bevorzugt ≥ 0,1 Mol/l bis ≤ 0,5 Mol/l.

Bevorzugt ist das Reduktionsmittel ausgewählt aus der Gruppe umfassend Polyalkohole, Aminophenole, Aminoalkohole, Aldehyde, Zucker, Weinsäure, Zitronensäure, Ascorbinsäure sowie deren Salze, Thioharnstoffe, Hydroxyaceton, Eisenammoniumcitrat, Triethanolamin, Hydrochinon, Dithionite, wie z.B. Natriumdithionit, Hydroxymethansulfinsäure, Disulfite, wie z.B. Natriumdisulfit, Formamidinsulfinsäure, schweflige Säure, Hydrazin, Hydroxylamin, Ethylendiamin, Tetramethylethylendiamin, Hydroxylaminsulfat, Borhydride, wie z.B. Natriumborhydrid, Formaldehyd, Alkohole, wie z.B. Ethanol, *n*-Propanol, *iso*-Propanol, *n*-Butanol, *iso*-Butanol, *sec*-Butanol, Ethylenglykol, Ethylenglykoldiacetat, Glycerin und/oder Dimethylaminoethanol. Ein besonders bevorzugtes Reduktionsmittel ist Formaldehyd. Gegebenenfalls können den Eduktlösungen, wobei hierunter auch die Lösung des Reduktionsmittels in Schritt b) verstanden wird, oder der nach Schritt a) erhaltenen Lösung noch weitere Substanzen wie niedermolekulare Additive, Salze, Fremdionen, Tenside und Komplexbildner zugesetzt werden. Weiterhin können die Eduktlösungen vor der Reaktion entgast werden, um beispielsweise Sauerstoff und CO₂ zu entfernen. Ebenfalls ist es möglich, dass die Eduktlösungen unter Schutzgas und/oder im Dunkeln gehandhabt werden.

Zur Entfernung von in der Produktdispersion, also in der Metallpartikeldispersion, gelösten Begleitstoffen und/oder Salzen und zur Aufkonzentrierung der Dispersion können die gängigen Verfahren der mechanischen Flüssigkeitsabtrennung (zum Beispiel Filtration am Druckfilter oder im Zentrifugalfeld, Sedimentation im Erdschwere- oder Zentrifugalfeld), der Extraktion, der Membrantechnik (Dialyse) und der Destillation eingesetzt werden.

Das erfindungsgemäße Verfahren kann als Batch-Verfahren oder als kontinuierliches Verfahren durchgeführt werden. Möglich ist auch eine Kombination aus beiden Verfahrensvarianten.

Es ist weiterhin möglich, dass die Produktdispersion mittels Standardverfahren (Ultrafiltration, Zentrifugation, Sedimentation - eventuell nach Zusatz von Flockungshilfsmitteln oder schlechtem Lösungsmittel - Dialyse und Eindampfen) aufkonzentriert und gegebenenfalls gewaschen werden.

Durch einen Waschschritt oder durch Zusatz von Additiven können gegebenenfalls die kolloid-chemische Stabilität und die anwendungstechnischen Eigenschaften der Produktdispersion weiter optimiert werden.

In einer besonders bevorzugten Ausführungsform der vorliegenden Erfindung kann mindestens einer, besonders bevorzugt beide der Schritte a) und b) in einem Mikroreaktor durchgeführt. "Mikroreaktor" im Rahmen der vorliegenden Erfindung bezeichnet hierbei miniaturisierte, vorzugsweise kontinuierlich arbeitende Reaktoren, die unter anderem unter der Bezeichnung "Mikroreaktor", "Minireaktor", "Mikromischer" oder "Minimischer" bekannt sind. Beispiele sind T- und Y-Mischer sowie die Mikromischer verschiedenster Firmen (z. B. Ehrfeld Mikrotechnik BTS GmbH, Institut für Mikrotechnik Mainz GmbH, Siemens AG, CPC Cellular Process Chemistry Systems GmbH).

Mikroreaktoren sind deshalb von Vorteil, da bei der kontinuierlichen Produktion von Mikro- und Nanopartikeln über nasschemische und heterogene Fällungsverfahren ein Einsatz von Mischeinheiten erforderlich ist. Als Mischeinheiten können die oben erwähnten Mikroreaktoren sowie Dispergierdüsen beziehungsweise Düsenreaktoren eingesetzt werden. Beispiele für Düsenreaktoren sind der MicroJetReactor (Synthesechemie GmbH) und der Strahldispergator (Bayer Technology Services GmbH). Gegenüber Batchverfahren haben kontinuierlich arbeitende Verfahren den Vorteil, dass die Hochskalierung vom Labor- auf den Produktionsmaßstab durch das "numbering up"-Prinzip anstelle des "scaling up"-Prinzips vereinfacht wird.

Ein weiterer Vorteil des erfindungsgemäßen Verfahrens ist es, dass aufgrund der gut kontrollierbaren Produkteigenschaften eine Durchführung in einem Mikroreaktor möglich ist, ohne dass dieser im kontinuierlichen Betrieb verstopft.

Es ist bevorzugt, die Durchführung des heterogenen Fällungsverfahrens zur Herstellung der Metalloxid/Hydroxid-Partikel als Mikroverfahren in einem Kapillarsystem umfassend einen ersten Verweiler, einen zweiten Verweiler, einen Mikroreaktor, einen dritten Verweiler sowie ein Druckventil durchzuführen. Besonders bevorzugt werden dabei die Eduktlösungen, also die Silbersalzlösung, die Metallsalzlösung und die Hydroxidionen enthaltenden Lösung, über Pumpen oder Hochdruckpumpen wie zum Beispiel HPLC-Pumpen mit einer konstanten Flussrate durch die Anlage beziehungsweise das Kapillarsystem gepumpt. Über das Druckventil nach einem Kühler wird die Flüssigkeit entspannt und über eine Austrittskapillare in einem Produktbehälter gesammelt.

Der Mikroreaktor ist zweckmäßigerweise ein Mischer mit einer Mischzeit von ≥ 0,01 s bis ≤ 10 s, bevorzugt ≥ 0,05 s bis ≤ 5 s, besonders bevorzugt ≥ 0,1 s bis ≤ 0,5 s.

Als Verweiler sind Kapillaren geeignet mit einem Durchmesser von ≥ 0,05 mm bis ≤ 20 mm, bevorzugt ≥ 0,1 mm bis ≤ 10 mm, besonders bevorzugt ≥ 0,5 mm bis ≤ 5 mm.

Die Länge der Verweiler liegt zweckmäßigerweise zwischen ≥ 0,05 m bis ≤ 10 m, bevorzugt ≥ 0,08 m bis ≤ 5 m, besonders bevorzugt ≥ 0,1 m bis ≤ 0,5 m.

Die Temperatur der Reaktionsmischung im System liegt zweckmäßigerweise zwischen ≥ 0°C bis ≤ 100°C, bevorzugt ≥ 5°C bis ≤ 50°C, besonders bevorzugt ≥ 3°C bis ≤ 30°C.

Die Flussraten der Eduktströme pro Mikroreaktoreinheit liegen zweckmäßigerweise zwischen ≥ 0,05 ml/min bis ≤ 5000 ml/min, bevorzugt ≥ 0,1 ml/min bis ≤ 250 ml/min, besonders bevorzugt ≥ 1 ml/min bis ≤ 100 ml/min.

Die erfindungsgemäßen Metallpartikelsole sowie die nach dem erfindungsgemäßen Verfahren hergestellten Metallpartikelsole eignen sich aufgrund der gegenüber bekannten Silberpartikelsolen verringerten Sinterzeit zur Erzielung vergleichbarer Leitfähigkeiten insbesondere zur Herstellung von leitfähigen Drucktinten für die Herstellung leitfähiger Beschichtungen bzw. leitfähiger Strukturen sowie zur Herstellung solcher leitfähigen Beschichtungen bzw. leitfähigen Strukturen.

Gegenstand der vorliegenden Erfindung ist daher weiterhin die Verwendung der erfindungsgemäßen Metallpartikelsole zur Herstellung von leitfähigen Drucktinten, vorzugsweise solchen für Inkjet- und Siebdruckverfahren, leitfähigen Beschichtungen, vorzugsweise leitfähigen transparenten Beschichtungen, leitfähigen Mikrostrukturen und/oder funktionellen Schichten. Die erfindungsgemäßen Metallpartikelsole eignen sich weiterhin zur Herstellung von Katalysatoren, sonstigen Beschichtungsmaterialien, metallurgischen Erzeugnissen, elektronischen Erzeugnissen, Elektrokeramiken, optischen Materialien, Biolabeln, Materialien zur fälschungssicheren Markierung, Kunststoffkompositen, antimikrobiellen Materialien und/oder Wirkstoff-Formulierungen.

Die Erfindung wird nachfolgend anhand von Beispielen näher erläutert, ohne sie jedoch hierdurch darauf zu beschränken.

### Beispiele

### Beispiel 1 (erfindungsgemäß)

### a) Herstellung eines Ag₂O/RuO₂-Nanopartikelsols in einem Batchverfahren

Es wurden eine 54 millimolare Lösung von Silbernitrat (9,17 g/l AgNO₃) als Eduktlösung 1 und eine 54 millimolare Lösung von NaOH (2,14 g/l) mit einer Dispergierhilfsmittelkonzentration von 10 g/l als Eduktlösung 2 sowie eine 0,12 molare RuCl₃ Lösung in Ethanol als Eduktlösung 3 angesetzt. Als Lösemittel wurde demineralisiertes Wasser (aufbereitet mit Milli-Qplus, QPAK®2, Millipore Corporation) eingesetzt. Als Dispergierhilfsmittel wurde Disperbyk® 190 (Byk GmbH) eingesetzt. In einem Glasbecher wurden bei Raumtemperatur 250 ml der Eduktlösung 1 vorgelegt. Unter fortwährendem Rühren wurden 250 ml der Eduktlösung 2 sowie 1 ml der Eduktlösung 3 über eine Dauer von 10 s gleichmäßig zu der Reaktionslösung zudosiert. Das äquivalente Verhältnis von Ruthenium zum Silber in der Eduktmischung betrug somit 9:1000 (0.9 Gew.-% Ruthenium bezogen auf den Gehalt an Silber). Der Ansatz wurde dann noch 10 min nachgerührt. Man erhielt ein grau-schwarz gefärbtes kolloid-chemisch stabiles Ag₂O/RuO₂-Nanopartikelsol.

### b) Reduktion mit Formaldehyd in einem Batchverfahren

500 ml des in Beispiel 1a hergestellten Ag₂O/RuO₂-Nanopartikelsols wurden unter fortwährendem Rühren bei Raumtemperatur mit 25 ml einer 2,33 molaren wässrigen Formaldehydlösung (70 g/l) versetzt, 30 min bei 60 °C gelagert und abgekühlt. Man erhielt ein kolloid-chemisch stabiles Sol mit metallischen, Rutheniumoxiddotierten Silbernanopartikeln. Anschließend wurden die Partikel mittels Zentrifugation (60 min bei 30000 U/min, Avanti J 30i, Rotor JA 30.50, Beckman Coulter GmbH) isoliert und durch Eintrag von Ultraschall (Branson Digital Sonifier) in demineralisiertem Wasser redispergiert. Es wurde ein kolloid-chemisch stabiles Metallpartikelsol mit einem Feststoffgehalt von 10 Gew.-% erhalten.

Die Untersuchung der Partikelgröße mittels dynamischer Lichtstreuung ergab kristalline Nanopartikel mit einem effektiven hydrodynamischen Durchmesser von 128 nm. Für die Messung mittels dynamischer Lichtstreuung wurde ein ZetaPlus Zeta Potential Analyzer der Fa. Brookhaven Instrument Corporation verwendet.

Von dieser Dispersion wurde eine 2 mm breite Linie auf eine Polycarbonat-Folie (Bayer MaterialScience AG, Makrolon® DE1-1) aufgetragen und für zehn Minuten in einem Ofen bei 140°C und Umgebungsdruck (1013 hPa) getrocknet und gesintert

Die Leitfähigkeit betrug nach 10 min 3000 S/m, nach 60 min 4,4 *10⁶ S/m.

### Beispiel 2 (erfindungsgemäß):

### a) Herstellung eines Ag₂O/RuO₂-Nanopartikelsols in einem Batchverfahren

Es wurden eine 54 millimolare Lösung von Silbernitrat (9,17 g/l AgNO₃) als Eduktlösung 1 und eine 54 millimolare Lösung von NaOH (2,14 g/l) mit einer Dispergierhilfsmittelkonzentration von 10 g/l als Eduktlösung 2 sowie eine 0,12 molare RuCl₃ Lösung als Eduktlösung 3 angesetzt. Als Lösemittel wurde demineralisiertes Wasser (aufbereitet mit Milli-Qplus, QPAK®2, Millipore Corporation) eingesetzt. Als Dispergierhilfsmittel wurde Disperbyk® 190 eingesetzt. In einem Glasbecher wurden bei Raumtemperatur 250 ml der Eduktlösung 1 vorgelegt. Unter fortwährendem Rühren wurden 250 ml der Eduktlösung 2 sowie 2,0 ml der Eduktlösung 3 über eine Dauer von 10 s gleichmäßig zu der Reaktionslösung zudosiert. Das äquivalente Verhältnis von Ruthenium zum Silber in der Eduktmischung betrug somit 18:1000 (1.8 Gew.-% Ruthenium bezogen auf den Gehalt an Silber). Der Ansatz wurde dann noch 10 min nachgerührt. Man erhielt ein grau-schwarz gefärbtes kolloid-chemisch stabiles Ag₂O/RuO₂-Nanopartikelsol.

### b) Reduktion mit Formaldehyd in einem Batchverfahren

500 ml des in Beispiel 2a) hergestellten Ag₂O/RuO₂-Nanopartikelsols wurden unter fortwährendem Rühren bei Raumtemperatur mit 25 ml einer 2,33 molaren wässrigen Formaldehydlösung (70 g/l) versetzt, 30 min bei 60 °C gelagert und abgekühlt. Man erhielt ein kolloid-chemisch stabiles Sol mit metallischen, Rutheniumoxiddotierten Silbernanopartikeln. Anschließend wurden die Partikel mittels Zentrifugation (60 min bei 30000 U/min, Avanti J 30i, Rotor JA 30.50, Beckman Coulter GmbH) isoliert und durch Eintrag von Ultraschall (Branson Digital Sonifier) in demineralisiertem Wasser redispergiert. Es wurde ein kolloid-chemisch stabiles Metallpartikelsol mit einem Feststoffgehalt von 10 Gew.-% erhalten.

Aus dieser Dispersion wurde auf die gleiche Weise wie in Beispiel 1b) beschrieben, eine Oberflächenbeschichtung auf eine Polycarbonat-Folie aufgebracht. Die analog zu Beispiel 1b) bestimmte Leitfähigkeit betrug nach 60 min 4,4 *10⁶ S/m.

### Vergleichsbeispiel 3: Rutheniumfreies Silbernanosol

Zum Vergleich wurde eine Dispersion mit sterisch stabilisierten Silbernanopartikeln hergestellt. Hierzu wurden eine 0,054 molare Silbernitratlösung mit einer Mischung aus einer 0,054 molaren Natronlauge und dem Dispergierhilfsmittel Disperbyk® 190 (1 g/l) in einem Volumenverhältnis von 1:1 versetzt und 10 min gerührt. Zu dieser Reaktionsmischung wurde unter Rühren eine 4,6 molare wässrige Formaldehyd-Lösung zugesetzt, so dass das Verhältnis Ag⁺ zu Reduktionsmittel 1:10 beträgt. Diese Mischung wurde auf 60°C erwärmt, 30 min bei dieser Temperatur gehalten und anschließend abgekühlt. Die Partikel wurden in einem ersten Schritt mittels Diafiltration von den nicht umgesetzten Edukten getrennt und anschließend wurde das Sol aufkonzentiert. Dazu wurde eine Membran mit 30000 Dalton verwendet. Es entstand ein kolloidstabiles Sol mit einem Feststoffgehalt von bis zu 20 Gew.-% (Silberpartikel und Dispergierhilfsmittel). Der Anteil an Disperbyk® 190 betrug laut Elementaranalyse nach der Membranfiltration 6 Gew.-% bezogen auf den Silbergehalt. Aus dieser Dispersion wurde auf die gleiche Weise wie in Beispiel 1b) beschrieben, eine Oberflächenbeschichtung auf eine Polycarbonat-Folie aufgebracht. Die analog zu Beispiel 1b) bestimmte spezifische Leitfähigkeit konnte erst nach einer Stunde Trocknungs- und Sinterzeit bei 140°C und Umgebungsdruck (1013 hPa) bestimmt werden. Die spezifische Leitfähigkeit betrug nach dieser Stunde Trocknungs- und Sinterzeit etwa 1 S/m.

### Vergleichsbeispiel 4: Nicht-erfindungsgemäßes Ruthenium-dotiertes Silbernanosol

### a) Herstellung eines Ag₂O/RuO₂Nanopartikelsols in einem Batchverfahren

Es wurden eine 54 millimolare Lösung von Silbernitrat (9,17 g/l AgNO₃) als Eduktlösung 1 und eine 54 millimolare Lösung von NaOH (2,14 g/l) mit einer Dispergierhilfsmittelkonzentration von 10 g/l als Eduktlösung 2 sowie eine 0,12 molare RuCl₃ Lösung als Eduktlösung 3 angesetzt. Als Lösemittel wurde demineralisiertes Wasser (aufbereitet mit Milli-Qplus, QPAK®2, Millipore Corporation) eingesetzt. Als Dispergierhilfsmittel wurde Disperbyk® 190 eingesetzt. In einem Glasbecher wurden bei Raumtemperatur 250 ml der Eduktlösung 1 vorgelegt. Unter fortwährendem Rühren wurden 250 ml der Eduktlösung 2 sowie 0,1 ml der Eduktlösung 3 über eine Dauer von 10 s gleichmäßig zu der Reaktionslösung zudosiert. Das äquivalente Massenverhältnis von Ruthenium zum Silber in der Eduktmischung betrug somit 9:10000 (0.09 Gew.-% Ruthenium bezogen auf den Gehalt an Silber). Der Ansatz wurde dann noch 10 min nachgerührt. Man erhielt ein grau-schwarz gefärbtes kolloid-chemisch stabiles Ag₂O/RuO₂-Nanopartikelsol.

### b) Reduktion mit Formaldehyd in einem Batchverfahren

500 ml des in Vergleichsbeispiel 4a) hergestellten Ag₂O/Ruo₂-Nanopartikelsols wurden unter fortwährendem Rühren bei Raumtemperatur mit 25 ml einer 2,33 molaren wässrigen Formaldehydlösung (70 g/l) versetzt, 30 min bei 60 °C gelagert und abgekühlt. Man erhielt ein kolloid-chemisch stabiles Sol mit metallischen, Rutheniumoxiddotierten Silbernanopartikeln. Anschließend wurden die Partikel mittels Zentrifugation (60 min bei 30000 U/min, Avanti J 30i, Rotor JA 30.50, Beckman Coulter GmbH) isoliert und durch Eintrag von Ultraschall (Branson Digital Sonifier) in demineralisiertem Wasser redispergiert. Es wurde ein kolloid-chemisch stabiles Metallpartikelsol mit einem Feststoffgehalt von 10 Gew.-% erhalten.

Aus dieser Dispersion wurde auf die gleiche Weise wie in Beispiel 1b) beschrieben, eine Oberflächenbeschichtung auf eine Polycarbonat-Folie aufgebracht. Analog zu Beispiel 3) konnte auch nach einer Stunde Trocknungs- und Sinterzeit bei 140°C und Umgebungsdruck (1013 hPa) keine spezifische Leitfähigkeit nachgewiesen werden.

## Patentansprüche

1. Metallnanopartikelsol mit einem Metallpartikelgehalt von ≥ 1 g/l enthaltend
- Silbernanopartikel
- wenigstens ein Dispergierhilfsmittel und
- wenigstens ein flüssiges Dispersionsmittel
**dadurch gekennzeichnet, dass** das Metallnanopartikelsol 0,1 bis 10 Gew.-% Ruthenium, bezogen auf den Silbergehalt des Metallnanopartikelsols, in Form des Metalls oder wenigstens einer Metallverbindung enthält, wobei das Ruthenium zu mindestens 90 Gew.-% in Form von Rutheniumdioxid vorliegt.

2. Metallnanopartikelsol gemäß Anspruch 1, **dadurch gekennzeichnet, dass** das Ruthenium zu wenigstens 95 Gew.-% in Form von Rutheniumdioxid vorliegt.

3. Metallnanopartikelsol gemäß Anspruch 1 oder 2, **dadurch gekennzeichnet, dass** das Ruthenium zu wenigstens 99 Gew.-% in Form von Rutheniumdioxid vorliegt.

4. Metallnanopartikelsol gemäß wenigstens einem der Ansprüche 1 bis 3, **dadurch gekennzeichnet, dass** es sich bei dem flüssigen Dispersionsmittel um Wasser oder eine Mischung enthaltend zu mindestens 50 Gew.-% Wasser handelt.

5. Metallnanopartikelsol gemäß wenigstens einem der Ansprüche 1 bis 4, **dadurch gekennzeichnet, dass** es sich bei dem Dispergierhilfsmittel um ein polymeres Dispergierhilfsmittel, bevorzugt um ein solches mit einem Gewichtsmittel *M*_{w}, von 100 g/Mol bis 1000000 g/Mol handelt.

6. Metallnanopartikelsol gemäß wenigstens einem der Ansprüche 1 bis 5, **dadurch gekennzeichnet, dass** es sich bei dem Dispergierhilfsmittel um wenigstens ein solches handelt ausgewählt aus der Gruppe umfassend Alkoxylate, Alkylolamide, Ester, Aminoxide, Alkylpolyglukoside, Alkylphenole, Arylalkylphenole, wasserlösliche Homopolymere, statistische Copolymere, Blockcopolymere, Pfropfpolymere, Polyethylenoxide, Polyvinylalkohole, Copolymere aus Polyvinylalkoholen und Polyvinylacetaten, Polyvinylpyrrolidone, Cellulose, Stärke, Gelatine, Gelatinederivate, Aminosäurepolymere, Polylysin, Polyasparaginsäure, Polyacrylate, Polyethylensulfonate, Polystyrolsulfonate, Polymethacrylate, Kondensationsprodukte von aromatischen Sulfonsäuren mit Formaldehyd, Naphthalinsulfonate, Ligninsulfonate, Copolymerisate acrylischer Monomere, Polyethylenimine, Polyvinylamine, Polyallylamine, Poly(2-vinylpyridine) und/oder Polydiallyldimethylammoniumchlorid.

7. Metallnanopartikelsol gemäß wenigstens einem der Ansprüche 1 bis 6, **dadurch gekennzeichnet, dass** das Metallnanopartikelsol 0,1 bis 5 Gew.-% Ruthenium, bezogen auf den Silbergehalt, in Form des Metalls oder wenigstens einer Metallverbindung enthält.

8. Verfahren zur Herstellung eines Metallnanopartikelsols gemäß wenigstens einem der Ansprüche 1 bis 7, **dadurch gekennzeichnet, dass**
a) eine Silbersalzlösung, eine Lösung enthaltend wenigstens ein Metallsalz ausgewählt aus der Gruppe der Rutheniumsalze und eine Hydroxidionen enthaltende Lösung mit einer Konzentration an Hydroxidionen im Bereich von ≥ 0,001 Mol/l bis 2 Mol/l, zusammengegeben werden,
b) anschließend die aus Schritt a) erhaltene Lösung mit einem Reduktionsmittel umgesetzt wird,
wobei mindestens eine der Lösungen in Schritt a) wenigstens ein Dispergierhilfsmittel enthält, **dadurch gekennzeichnet, dass** die drei Lösungen in Schritt a) gleichzeitig zusammengegeben werden.

9. Verfahren gemäß Anspruch 8, **dadurch gekennzeichnet, dass** es sich bei der Silbersalzlösung um eine solche enthaltend Silberkationen und Anionen ausgewählt aus der Gruppe Nitrat, Perchlorat, Fulminate, Citrat, Acetat, Acetylacetonat, Tetrafluoroborat oder Tetraphenylborat handelt.

10. Verfahren gemäß Anspruch 8 oder 9, **dadurch gekennzeichnet, dass** die Hydroxidionen enthaltende Lösung erhältlich ist aus der Reaktion von Basen ausgewählt aus der Gruppe umfassend LiOH, NaOH, KOH, Mg(OH)₂, Ca(OH)₂, NH₄OH, aliphatische Amine, aromatische Amine, Alkalimetallamide und/oder Alkoxide.

11. Verfahren gemäß wenigstens einem der Ansprüche 8 bis 10, **dadurch gekennzeichnet, dass** das Reduktionsmittel ausgewählt ist aus der Gruppe umfassend Polyalkohole, Aminophenole, Aminoalkohole, Aldehyde, Zucker, Weinsäure, Zitronensäure, Ascorbinsäure sowie deren Salze, Triethanolamin, Hydrochinon, Natriumdithionit, Hydroxymethansulfinsäure, Natriumdisulfit, Formamidinsulfinsäure, schweflige Säure, Hydrazin, Hydroxylamin, Ethylendiamin, Tetramethylethylendiamin, Hydroxylaminsulfat, Natriumborhydrid, Formaldehyd, Alkohole, Ethanol, n-Propanol, iso-Propanol, n-Butanol, iso-Butanol, sec-Butanol, Ethylenglykol, Ethylenglykoldiacetat, Glycerin und/oder Dimethylaminoethanol.

12. Verfahren gemäß wenigstens einem der Ansprüche 8 bis 11, **dadurch gekennzeichnet, dass** es sich bei dem Metallsalz um wenigstens ein Rutheniumsalz ausgewählt aus Rutheniumchlorid, Rutheniumacetat, Rutheniumnitrat, Rutheniumethoxid, Ruthenium-acetylacetonat handelt.

13. Verwendung eines Metallnanopartikelsols gemäß wenigstens einem der Ansprüche 1 bis 7 zur Herstellung von leitfähigen Drucktinten.

14. Verwendung eines Metallnanopartikelsols gemäß wenigstens einem der Ansprüche 1 bis 7 zur Herstellung von leitfähigen Beschichtungen oder leitfähigen Strukturen.

## Claims

1. Metal nanoparticle sol having a metal particle content ≥ 1 g/l, containing
- silver nanoparticles
- at least one dispersant and
- at least one liquid dispersion medium
**characterized in that** the metal nanoparticle sol contains from 0.1 to 10 wt% of ruthenium expressed in terms of the silver content of the metal nanoparticle sol, in the form of the metal or at least one metal compound, where at least 90 wt% of the ruthenium is present in the form of ruthenium dioxide.

2. Metal nanoparticle sol according to Claim 1, **characterized in that** at least 95 wt% of the ruthenium is present in the form of ruthenium dioxide.

3. Metal nanoparticle sol according to Claim 1 or 2, **characterized in that** at least 99 wt% of the ruthenium is present in the form of ruthenium dioxide.

4. Metal nanoparticle sol according to at least one of Claims 1 to 3, **characterized in that** the liquid dispersion medium is water or a mixture containing at least 50 wt% of water.

5. Metal nanoparticle sol according to at least one of Claims 1 to 4, **characterized in that** the dispersant is a polymeric dispersant, preferably one with a weight average *M*_{w}, from 100 g/mol to 1 000 000 g/mol.

6. Metal nanoparticle sol according to at least one of Claims 1 to 5, **characterized in that** the dispersant is at least one dispersant selected from the group consisting of alkoxylates, alkylolamides, esters, amine oxides, alkyl polyglucosides, alkylphenols, arylalkylphenols, water-soluble homopolymers, statistical copolymers, block copolymers, graft polymers, polyethylene oxides, polyvinyl alcohols, copolymers of polyvinyl alcohols and polyvinyl acetates, polyvinylpyrrolidones, cellulose, starch, gelatin, gelatin derivatives, amino acid polymers, polylysine, polyasparagic acid, polyacrylates, polyethylene sulphonates, polystyrene sulphonates, polymethacrylates, condensation products of aromatic sulphonic acids with formaldehyde, naphthalene sulphonates, lignosulphonates, copolymers of acrylic monomers, polyethyleneimines, polyvinylamines, polyallylamines, poly(2-vinylpyridines) and/or polydiallyldimethylammonium chloride.

7. Metal nanoparticle sol according to at least one of Claims 1 to 6, **characterized in that** the metal nanoparticle sol contains from 0.1 to 5 wt% of ruthenium expressed in terms of the silver content, in the form of the metal or at least one metal compound.

8. Method for producing a metal nanoparticle sol according to at least one of Claims 1 to 7, **characterized in that**
a) a silver salt solution, a solution containing at least one metal salt selected from the group of the ruthenium salts, and a solution containing hydroxide ions having a concentration of hydroxide ions in the range from ≥ 0.001 mol/l to 2 mol/l are combined,
b) the solution obtained from step a) is subsequently reacted with a reducing agent,
at least one of the solutions in step a) containing at least one dispersant, **characterized in that** the three solutions are combined simultaneously in step a).

9. Method according to Claim 8, **characterized in that** the silver salt solution is one containing silver cations and anions selected from the group: nitrate, perchlorate, fulminates, citrate, acetate, acetylacetonate, tetrafluoroborate or tetraphenylborate.

10. Method according to Claim 8 or 9, **characterized in that** the solution containing hydroxide ions can be obtained by the reaction of bases selected from the group consisting of LiOH, NaOH, KOH, Mg(OH)₂, Ca(OH)₂, NH₄OH, aliphatic amines, aromatic amines, alkali metal amides, and/or alkoxides.

11. Method according to at least one of Claims 8 to 10, **characterized in that** the reducing agent is selected from the group consisting of polyalcohols, aminophenols, amino alcohols, aldehydes, sugars, tartaric acid, citric acid, ascorbic acid and salts thereof, triethanolamine, hydroquinone, sodium dithionite, hydroxymethanesulphinic acid, sodium disulphite, formamidinesulphinic acid, sulphurous acid, hydrazine, hydroxylamine, ethylenediamine, tetramethylethylenediamine, hydroxylamine sulphate, sodium borohydride, formaldehyde, alcohols, ethanol, n-propanol, isopropanol, n-butanol, isobutanol, sec-butanol, ethylene glycol, ethylene glycol diacetate, glycerol and/or dimethylaminoethanol.

12. Method according to at least one of Claims 8 to 11, **characterized in that** the metal salt is at least one ruthenium salt selected from ruthenium chloride, ruthenium acetate, ruthenium nitrate, ruthenium ethoxide, ruthenium acetylacetonate.

13. Use of a metal nanoparticle sol according to at least one of Claims 1 to 7 for the production of conductive printing inks.

14. Use of a metal nanoparticle sol according to at least one of Claims 1 to 7 for the production of conductive coatings or conductive structures.

## Revendications

1. Sol de nanoparticules métalliques ayant une teneur en particules métalliques ≥ 1 g/l, contenant :
- des nanoparticules d'argent,
- au moins un adjuvant de dispersion et
- au moins un agent de dispersion liquide,
**caractérisé en ce que** le sol de nanoparticules métalliques contient 0,1 à 10 % en poids de ruthénium, par rapport à la teneur en argent du sol de nanoparticules métalliques, sous la forme du métal ou d'au moins un composé du métal, le ruthénium étant présent à hauteur d'au moins 90 % en poids sous la forme de dioxyde de ruthénium.

2. Sol de nanoparticules métalliques selon la revendication 1, **caractérisé en ce que** le ruthénium est présent à hauteur d'au moins 95 % en poids sous la forme de dioxyde de ruthénium.

3. Sol de nanoparticules métalliques selon la revendication 1 ou 2, **caractérisé en ce que** le ruthénium est présent à hauteur d'au moins 99 % en poids sous la forme de dioxyde de ruthénium.

4. Sol de nanoparticules métalliques selon au moins l'une quelconque des revendications 1 à 3, **caractérisé en ce que** l'agent de dispersion liquide est de l'eau ou un mélange contenant au moins 50 % en poids d'eau.

5. Sol de nanoparticules métalliques selon au moins l'une quelconque des revendications 1 à 4, **caractérisé en ce que** l'adjuvant de dispersion est un adjuvant de dispersion polymère, de préférence ayant une moyenne en poids M_{w} de 100 g/mol à 1 000 000 g/mol.

6. Sol de nanoparticules métalliques selon au moins l'une quelconque des revendications 1 à 5, **caractérisé en ce que** l'adjuvant de dispersion est au moins un adjuvant de dispersion choisi dans le groupe comprenant les alcoxylates, les alkylolamides, les esters, les aminoxydes, les alkylpolyglucosides, les alkylphénols, les arylalkylphénols, les homopolymères solubles dans l'eau, les copolymères statistiques, les copolymères séquencés, les polymères greffés, les polyoxydes d'éthylène, les alcools polyvinyliques, les copolymères d'alcools polyvinyliques et de polyacétates de vinyle, les polyvinylpyrrolidones, la cellulose, l'amidon, la gélatine, les dérivés de gélatine, les polymères d'acides aminés, la polylysine, l'acide polyasparagique, les polyacrylates, les polysulfonates d'éthylène, les polysulfonates de styrène, les polyméthacrylates, les produits de condensation d'acides sulfoniques aromatiques avec du formaldéhyde, les sulfonates de naphtaline, les sulfonates de lignine, les copolymères de monomères acryliques, les polyéthylène-imines, les polyvinylamines, les polyallylamines, les poly(2-vinylpyridines) et/ou le polychlorure de diallyldiméthylammonium.

7. Sol de nanoparticules métalliques selon au moins l'une quelconque des revendications 1 à 6, **caractérisé en ce que** le sol de nanoparticules métalliques contient 0,1 à 5 % en poids de ruthénium, par rapport à la teneur en argent, sous la forme du métal ou d'au moins un composé du métal.

8. Procédé de fabrication d'un sol de nanoparticules métalliques selon au moins l'une quelconque des revendications 1 à 7, **caractérisé en ce que**
a) une solution d'un sel d'argent, une solution contenant au moins un sel métallique choisi dans le groupe des sels de ruthénium et une solution contenant des ions hydroxyde ayant une concentration en ions hydroxyde dans la plage allant de ≥ 0,001 mol/l à 2 mol/l, sont réunies, puis
b) la solution obtenue à l'étape a) est mise en réaction avec un réducteur,
au moins une des solutions à l'étape a) contenant au moins un adjuvant de dispersion, **caractérisé en ce que** les trois solutions sont réunies simultanément à l'étape a) .

9. Procédé selon la revendication 8, **caractérisé en ce que** la solution d'un sel d'argent est une solution contenant des cations argent et des anions choisis dans le groupe constitué par le nitrate, le perchlorate, le fulminate, le citrate, l'acétate, l'acétylacétonate, le tétrafluoroborate ou le tétraphénylborate.

10. Procédé selon la revendication 8 ou 9, **caractérisé en ce que** la solution contenant des ions hydroxyde peut être obtenue par la réaction de bases choisies dans le groupe comprenant LiOH, NaOH, KOH, Mg(OH)₂, Ca(OH)₂, NH₄OH, les amines aliphatiques, les amines aromatiques, les amides de métaux alcalins et/ou les alcoxydes.

11. Procédé selon au moins l'une quelconque des revendications 8 à 10, **caractérisé en ce que** le réducteur est choisi dans le groupe comprenant les polyalcools, les aminophénols, les aminoalcools, les aldéhydes, les sucres, l'acide tartrique, l'acide citrique, l'acide ascorbique et ses sels, la triéthanolamine, l'hydroquinone, le dithionite de sodium, l'acide hydroxyméthane-sulfinique, le disulfite de sodium, l'acide formamidine-sulfinique, l'acide sulfureux, l'hydrazine, l'hydroxylamine, l'éthylène-diamine, la tétraméthyléthylène-diamine, le sulfate d'hydroxylamine, le borohydrure de sodium, le formaldéhyde, les alcools, l'éthanol, le n-propanol, l'isopropanol, le n-butanol, l'iso-butanol, le sec-butanol, l'éthylène glycol, le diacétate d'éthylène glycol, la glycérine et/ou le diméthylaminoéthanol.

12. Procédé selon au moins l'une quelconque des revendications 8 à 11, **caractérisé en ce que** le sel métallique est au moins un sel de ruthénium choisi parmi le chlorure de ruthénium, l'acétate de ruthénium, le nitrate de ruthénium, l'éthoxyde de ruthénium, l'acétylacétonate de ruthénium.

13. Utilisation d'un sol de nanoparticules métalliques selon au moins l'une quelconque des revendications 1 à 7 pour la fabrication d'encres d'impression conductrices.

14. Utilisation d'un sol de nanoparticules métalliques selon au moins l'une quelconque des revendications 1 à 7 pour la fabrication de revêtements conducteurs ou de structures conductrices.
